Europäisches Patentamt

**European Patent Office**

Office européen des brevets

(11) Numéro de publication: **0 051 035**
**A1**

# (12) DEMANDE DE BREVET EUROPEEN

(21) Numéro de dépôt: **81430027.3**

(22) Date de dépôt: **17.08.81**

(51) Int. Cl.³: **G 01 K 13/04**

(30) Priorité: **22.08.80 FR 8018476**

(43) Date de publication de la demande:
**05.05.82 Bulletin 82/18**

(84) Etats contractants désignés:
**BE CH DE GB LI NL SE**

(71) Demandeur: **CONTROLE MESURE REGULATION CMR**
**Société Anonyme**
**12 Traverse Magnan BP 205**
**F-13302 Marseille Cedex 3(FR)**

(72) Inventeur: **Serre, Edmond**
**La Croix du Sud Vill No.I**
**Allée C. Baldacchini F-13009 Marseille(FR)**

(74) Mandataire: **Roman, Alphonse**
**35 Rue Paradis**
**F-13001 Marseille(FR)**

(54) Dispositif de contrôle de température (ou d'autre paramètre physique binaire) de pièces à mouvement périodique.

(57) L'objet de l'invention concerne une première addition apportée au Brevet Français No 79 20 749 du 09/09/1979, pour un dispositif de contrôle de température (ou d'autre paramètre physique binaire) de pièces à mouvement périodique.

Le dispositif suivant l'invention est constitué par la combinaison d'une bobine fixe (1), émettrice d'un champ magnétique dont une partie du flux est captée par une bobine réceptrice fixe (2), ainsi que d'une troisième bobine (3) fixée sur la pièce mobile formant écran entre les deux autres, lors de son passage.

Il est destiné à permettre la mesure permanente et le contrôle de la température de pièces à mouvement périodique.

FIG 1

- 1 -

Dispositif de contrôle de température (ou d'autre paramètre physique binaire) de pièces à mouvement périodique.

L'objet de l'invention concerne une première addition apportée au Brevet Français N° 79 20 749 du 09/09/1979, pour un dispositif de contrôle de température (ou d'autre paramètre physique binaire) de pièces à mouvement périodique.

Il est destiné à permettre la mesure permanente et le contrôle de la température de pièces à mouvement périodique.

Les appareillages connus limitent les applications des dispositifs destinés à ces contrôles à la mesure des températures, mais ils ne permettent pas de mesurer en même temps la mesure permanente de la température de pièces à mouvement périodique.

Dans les systèmes conus, le mouvement demandé était circulaire uniquement ou rectiligne uniquement. Une autre différence apparait dans le principe de la détection de la grandeur à mesurer : équivalent transformateur qui reçoit le signal par son primaire et le renvoie par son secondaire, ou bien encore une pièce en mouvement rectiligne, mince et d'épaisseurs constantes passant par l'entrefer d'un équivalent transformateur et aboutissant non pas à une mesure vraie de la température, mais à une mesure comparative par rapport à la température du local où s'effectue la mesure.

Le dispositif suivant l'invention est destiné à être appliqué sur toute pièce en mouvement, dès lors que ce dernier est périodique, à trajectoire connue et constante, telles les bielles de moteurs Diesel et à combustion interne en général.

La trajectoire pouvant avoir une courbe compliquée ou non. Il peut s'agir de mouvement circulaire, elliptique, rectiligne ou quelconque. La vitesse du mouvement peut être constante ou non. Le sens du mouvement est indifférent.

Le dispositif suivant l'invention est constitué par la combinaison d'une bobine fixe, émettrice d'un champ magnétique dont une partie du flux est captée par une bobine réceptrice fixe, ainsi que d'une troisième bobine fixée sur la pièce mobile formant écran entre les deux autres, lors de son passage.

Sur les dessins annexés donnés à titre d'exemple non limitatif d'une des formes de réalisation de l'objet de l'invention :

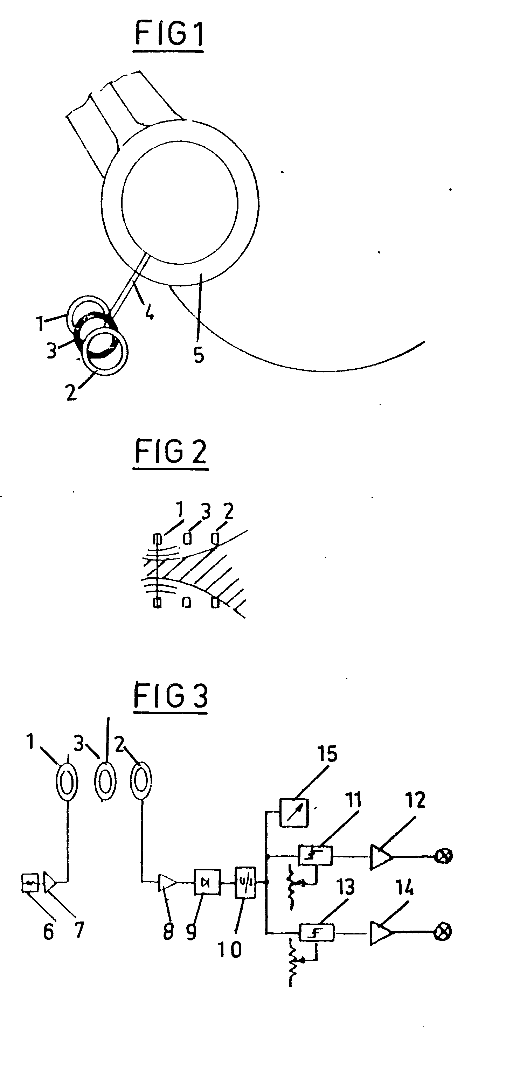

La figure 1 représente le dispositif dans son ensemble ; la figure 2 montre la répartition du champ magnétique ; la figure 3 représente le synoptique de la partie électronique.

Pour réaliser une mesure permanente de la température, la bobine émettrice 1 est excitée à une fréquence de l'ordre de 35 à 60 KHertz et crée un champ magnétique dont une partie du flux est captée par la bobine réceptrice 2.

Le flux commun est coupé à chaque passage de la bobine 3. Cette dernière est reliée à une bielle 5 par exemple, au moyen du plongeur 4 à l'autre extrémité duquel se trouve une thermistance à coefficient de température négatif, placée dans la zone dont on veut mesurer et contrôler la température.

La thermistance est telle qu'à température normale (70 à 90° C) elle présente une valeur d'environ 1000 à 1500 ohms, suivant une ligne exponentielle.

Lors du passage de la bobine 3 entre les deux bobines émettrices et receptrices 1 et 2, celle-ci crée un affaiblissement de la porteuse dont la valeur dépend de la résistance de la thermistance, donc de la température à mesurer.

Cette porteuse ainsi modulée par l'effet de la température est ensuite amplifiée par 8 et démodulée en 9 de manière à obtenir une tension continue image de la température. Par un convertisseur 10 ten-

- 4 -

sion/courant, on obtient un courant continu image de la température à mesurer, envoyé directement sur un galvanomètre de lecture 15.

Par ailleurs, l'information est aussi envoyée à l'entrée de deux comparateurs 11 et 13, l'un pour un seuil d'alarme de température haute, l'autre pour un seuil d'alarme de température basse, assurant ainsi la fonction de contrôle.

Le système utilise une transmission herztienne dont tous les éléments actifs se trouvent sur la partie fixe.

L'élément mobile 3 ne porte que des composants passifs simples, robustes et inréglables.

Le système est à sécurité positive car en cas de rupture de la thermistance, cette dernière prend une valeur ohmique très élevée (l'infini) assimilable à l'effet d'une température basse.

A ce moment là, le comparateur calé sur la consigne de température basse, déclenche l'alarme.

Le déclenchement d'un des seuils d'alarme a lieu même en cas de défaillance de l'électronique d'émission de signal ou de traitement de l'information.

- 5 -

Le prix de revient réduit de ces systèmes lui permet une application dans toute machine autre que le moteur Diesel et son coussinet de tête de bielle en particulier.

Toutefois, les formes, dimensions et dispositions des différents éléments pourront varier dans la limite des équivalents comme d'ailleurs les matières utilisées pour leur fabrication, sans changer pour celà la conception générale de l'invention qui vient d'être décrite.

- 1 -

Revendications de brevet

1. Dispositif destiné à permettre la mesure permanente et le contrôle de la température des pièces en mouvement périodique se caractérisant par une bobine fixe (1) émettrice d'un champ magnétique dont une partie du flux est captée par une bobine fixe (2) ainsi qu'une troisième bobine (3) fixée sur la pièce mobile (5) formant écran entre les deux autres lors de son passage.

2. Dispositif suivant la revendication 1 se caractérisant par le fait que la bobine (3) est reliée à la bielle (5) par un plongeur (4) à l'autre extrémité duquel se trouve une thermistance placée dans la zone dont on veut mesurer et contrôler la température.

3. Dispositif suivant la revendication 1 se caractérisant par le fait que la bobine porteuse (3) modulée par l'effet de la température est amplifiée par (8) et démodulée en (9) de façon à obtenir une tension continue image de la température en même temps que le convertisseur (10) tension/courant envoie un courant continu image de la température à mesurer au galvanomètre de lecture (15).

4. Dispositif suivant la revendication 1 se caractérisant par le fait que l'information est envoyée entre deux comparateurs (11 et 13) pour fonction de contrôle.

0051035

# FIG 1

# FIG 2

# FIG 3

0051035

Office européen des brevets

**RAPPORT DE RECHERCHE EUROPEENNE**

Numéro de la demande

EP 81 43 0027

## DOCUMENTS CONSIDERES COMME PERTINENTS

| Catégorie | Citation du document avec indication, en cas de besoin, des parties pertinentes | Revendication concernée |
|---|---|---|
| X | FR - A - 2 178 917 (J.M. VOITH GmbH)<br><br>* titre; figures 1,3,4; page 8, ligne 1 à page 9, ligne 12; page 10, ligne 24 à page 11, ligne 24; page 11, ligne 33 à page 12, ligne 8 * | 1,2 |
| | FR - A - 2 396 964 (VOITH TURBO GmbH)<br><br>* titre, page 6, ligne 27 à page 8, ligne 38; figures 1,2 * | 1-3 |
| | US - A - 3 927 571 (S.E. ATHEY)<br><br>* titre; figures 1,2; ensemble du brevet * | 4 |
| | IBM TECHNICAL DISCLOSURE BULLETIN, volume 20, no. 3, août 1977 NEW YORK (US) R.M. DAVENPORT et al. "Temperature monitoring circuits", page 898<br><br>* page 898 * | 4 |
| | DE - B - 1 616 431 (DIENERS-HONEYWELL HOLDING GmbH)<br><br>* figures 1,2,5,6; colonne 3, lignes 21-35; colonne 4, lignes 2-33 * | 1 |

**CLASSEMENT DE LA DEMANDE (Int. Cl. 3)**

G 01 K 13/04
3/00

**DOMAINES TECHNIQUES RECHERCHES (Int. Cl. 3)**

G 01 K 13/04
13/06
13/08
3/00

**CATEGORIE DES DOCUMENTS CITES**

X: particulièrement pertinent à lui seul
Y: particulièrement pertinent en combinaison avec un autre document de la même catégorie
A: arrière-plan technologique
O: divulgation non-écrite
P: document intercalaire
T: théorie ou principe à la base de l'invention
E: document de brevet antérieur, mais publié à la date de dépôt ou après cette date
D: cité dans la demande
L: cité pour d'autres raisons

&: membre de la même famille, document correspondant

Le présent rapport de recherche a été établi pour toutes les revendications

| Lieu de la recherche | Date d'achèvement de la recherche | Examinateur |
|---|---|---|
| La Haye | 28-01-1982 | VISSER |

OEB Form 1503.1 06.78